(19) Europäisches Patentamt / European Patent Office / Office européen des brevets

(11) **EP 4 047 505 B1**

(12) **EUROPEAN PATENT SPECIFICATION**

(45) Date of publication and mention
of the grant of the patent:
**09.04.2025 Bulletin 2025/15**

(21) Application number: **20959568.5**

(22) Date of filing: **10.12.2020**

(51) International Patent Classification (IPC):
**B64D 45/00** *(2006.01)*     **G08G 5/00** *(2025.01)*
**G06F 40/30** *(2020.01)*     **G06F 40/216** *(2020.01)*
**G06F 40/279** *(2020.01)*     **G06F 40/247** *(2020.01)*
**G06F 16/332** *(2025.01)*     **G06F 16/36** *(2019.01)*
**G06F 16/38** *(2019.01)*     **G06N 3/084** *(2023.01)*
**G06N 3/045** *(2023.01)*     **G06N 5/025** *(2023.01)*

(52) Cooperative Patent Classification (CPC):
**G06F 40/30; G06F 16/332; G06F 16/367;
G06F 16/38; G06F 40/216; G06F 40/247;
G06F 40/279; G06N 3/045; G06N 3/084;
G06N 5/025; G08G 5/21;** B64D 2045/0075;
G06N 7/01; Y02D 10/00

(86) International application number:
**PCT/CN2020/135364**

(87) International publication number:
**WO 2022/088409 (05.05.2022 Gazette 2022/18)**

(54) **INTERACTIVE RETRIEVAL METHOD PERFORMED ON AN ONBOARD COMPUTER OF AN ELECTRONIC FLIGHT BAG, ELECTRONIC FLIGHT BAG INCLUDING AN INTERACTIVE RETRIEVAL APPARATUS, COMPUTER DEVICE OF AN ELECTRONIC FLIGHT BAG, AND COMPUTER STORAGE MEDIUM OF AN ELECTRONIC FLIGHT BAG**

INTERAKTIVES ABRUFVERFAHREN IN EINEM ELEKTRONISCHEN PILOTENKOFFER, ELEKTRONISCHER PILOTENKOFFER MIT ABRUFVORRICHTUNG, COMPUTERVORRICHTUNG EINES ELEKTRONISCHEN PILOTENKOFFERS, UND SPEICHERMEDIUM EINES ELEKTRONISCHEN PILOTENKOFFERS

PROCÉDÉ ET APPAREIL DE RÉCUPÉRATION INTERACTIVE D'ORGANISATEURS ÉLECTRONIQUES DE POSTE DE PILOTAGE, ORGANISATEURS ÉLECTRONIQUES DE POSTE DE PILOTAGE AVEC DISPOSITIF INFORMATIQUE DE RÉCUPÉRATION INTERACTIVE, DISPOSITIF INFORMATIQUE DE RÉCUPÉRATION INTERACTIVE DE ORGANISATEURS ÉLECTRONIQUES DE POSTE DE PILOTAGE ET SUPPORT DE STOCKAGE DE ORGANISATEURS ÉLECTRONIQUES DE POSTE DE PILOTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2020 CN 202011169946**

(43) Date of publication of application:
**24.08.2022 Bulletin 2022/34**

(73) Proprietors:
• **Comac Beijing Aircraft Technology Research
Institute
Beijing 102211 (CN)**
• **Commercial Aircraft Corporation Of China, Ltd.
Shanghai 200131 (CN)**

(72) Inventors:
• **LI, Bo
Beijing 102211 (CN)**
• **XU, Shuhan
Beijing 102211 (CN)**

EP 4 047 505 B1

• **ZHANG, Jiong**
  **Beijing 102211 (CN)**

(74) Representative: **Gille Hrabal**
  **Partnerschaftsgesellschaft mbB**
  **Patentanwälte**
  **Brucknerstraße 20**
  **40593 Düsseldorf (DE)**

(56) References cited:
  **CN-A- 102 231 165    CN-A- 108 647 318**
  **CN-A- 109 359 178    CN-A- 109 359 178**
  **CN-A- 109 522 465    CN-A- 111 353 030**
  **US-A1- 2003 101 177   US-B1- 6 185 558**
  **US-B1- 8 359 309     US-B2- 10 558 687**

**Description**

TECHNICAL FIELD

The present invention relates to the crossing field of computer software and avionics systems, and in particular to an interactive retrieval method and apparatus, a computer device, and a storage medium.

BACKGROUND

Electronic flight bags are an electronic information management device that serves to display flight data in the electronic display system of an aircraft cockpit, carry out performance calculations at various flight stages and complete flight operation inspections. This device can help pilots use less paper and perform flight management tasks in an easier and effective way. Electronic flight bags are considered as a critical step for realizing a paperless cockpit in civil aircrafts and also as one of the major innovations in usage and management of airline operation information.

An electronic flight bag includes an onboard computer and an electronic database stored therein. During practical application, common onboard computers that are applied in the electronic flight bag include handheld portable commercial finished computers, portable computers fixed on the aircraft, computers installed on the aircraft and meeting airworthiness requirements, etc. Intelligent query technologies can be applied to the electronic flight bag, so that pilots can search for the most useful information within the shortest query time period to assist flight operations, thus improving the working efficiency of pilots and further ensuring flight safety.

The existing retrieval methods for electronic flight bags cannot give a reflection of the query habits and intention from pilots, which makes it difficult for the pilots to find the required information swiftly and accurately. As a result, the workload of the pilots cannot be efficiently reduced and the retrieval efficiency of electronic flight bags is relatively low. Furthermore, in the existing retrieval methods in which machine learning is applied, there is no interpretability with regard to the relationships between various data parameters and parameter adjustment lacks unified quantitative indexes, which brings uncertainty to the application of electronic flight bags. CN 109 359 178 A relates to a retrieval method comprising acquiring a retrieval statement, determining a retrieval entity from the retrieval statement; acquiring semantic similarity relationships among entities of the knowledge map, acquiring entities whose semantic similarity with the retrieval entities is greater than a first set threshold value in the knowledge map, and obtaining an extended retrieval entity set.

**SUMMARY**

The present invention provides an interactive retrieval computer implemented method performed on an onboard computer of an electronic flight bag, an electronic flight bag, including an interactive retrieval apparatus, a computer device of an electronic flight bag, the computer device and a computer storage medium of an electronic flight bag as set out in the independent claims.

Preferred embodiments are set out in the dependent claims.

The invention proposes an interactive retrieval method and apparatus, a computer device and a storage medium, in which an electronic flight bag functions as an avionic hardware carrier to accomplish query behavior interactions with pilots, a knowledge graph for flight operations is generated from deep learning based on contextual semantics of a flight operation corpus and from reinforcement learning based on pilot's query behavior logs, flight operation knowledge and pilot's empirical knowledge are subjected to quantitative reasoning and insight, and finally personalized intelligent query methods that are suitable for pilot's query habits and intentions are attained. Compared with the prior art, this solution increases the retrieval efficiency of electronic flight bags efficiently, ensures safety during flight operation, modernizes the flight operations of civil aircrafts, guarantees flight safety effectively, reduces the workload of pilots, improves the economic benefits of airlines, and enhances the core competitiveness of civil aircrafts.

**BRIEF DESCRIPTION OF THE DRAWINGS**

To illustrate the technical solutions of the embodiments of the present invention more clearly, the accompanying drawings that need to be used in the description of the embodiments of the present invention will be briefly introduced below. Apparently, the drawings in the following description are merely some embodiments of the present invention. For those of ordinary skill in the art, other drawings can also be obtained from these drawings without creative efforts.

FIG. 1 is a general flowchart of an interactive retrieval method according to the present invention;
FIG. 2 is a flowchart of building a knowledge graph prior to the first interactive retrieval according to an embodiment of the present invention;
FIG. 3 is a flowchart of extending a query statement according to the present invention;

FIG. 4 is a block diagram of an interactive retrieval apparatus according to the present invention; and
FIG. 5 is a setup diagram of a computer device according to an embodiment of the present invention.

## DETAILED DESCRIPTION

The technical solutions in the embodiments of the present invention will be clearly and fully described below with reference to the accompanying drawings in the embodiments of the present invention. Obviously, the embodiments described are some, but not all, embodiments of the present invention. Based on the embodiments of the present invention, all other embodiments attained by those of ordinary skill in the art without creative efforts shall fall within the protection scope of the present invention.

In an embodiment of the present invention, provided is an interactive retrieval method, in which the knowledge graph is built prior to the first retrieval, or the existing knowledge graph is directly acquired.

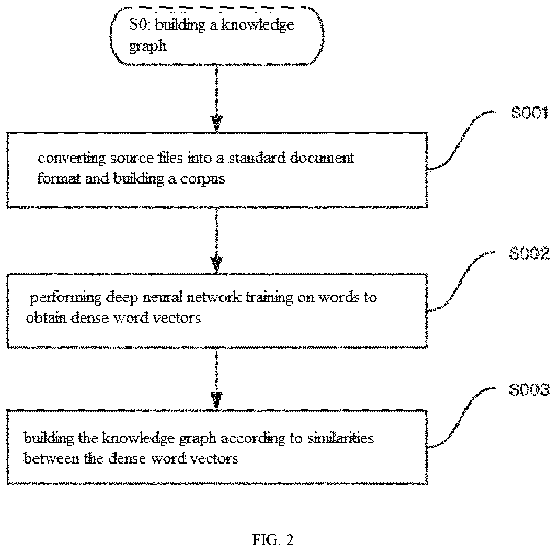

In an embodiment of the present invention, the knowledge graph shall be built prior to the first retrieval (i.e., S0), and the specific building method, as illustrated in FIG. 2, includes the following steps:

S001: converting source files into a standard document format and building a corpus;
The source files are flight manual technology publications that provide important references for pilots, such as FCOM, SOP, QRH, etc. The above publications have been widely used by airlines. To meet the airline's demands for interactive manual access, information sharing as well as easy maintenance and updating, main aircraft manufacturers have accomplished electronization and digitalization of some flight manual technology publications by referring to S1000D and ATA2300 standards. There is a wide diversity offlight reference materials offered by various airlines, including flight manual paper files, flight manual PDF files, interactive electronic flight manuals, advisory circulars and other data sources in different formats. To maintain and update fundamental data, it is necessary to parse these data by utilizing a unified standard.

Based upon their editability, source files can be classified into text file type (TXT, EXCEL, WORD, XML) and PDF file type. The most basic unit for source file decomposition is a document with relatively complete semantics and logic. By taking the document as the smallest indivisible atomic unit, a source file is decomposed into combinations of multiple documents.

In the present application, ID attribute, TITLE attribute, AIRCRAFT_NUMBER attribute and VALUE attribute are added into each document through a strict logical hierarchy, so as to generate a standard document format. Given below is the detailed description of each attribute.

ID attribute (identifier attribute) is the unique identifier indicating the specific location of the document in the source file, and is also a 5-digit string separated by character ". "; UI interface designers can extract this string and quickly determine the specific chapter, section, subsection and document location of the text in the source file;

TITLE attribute (title attribute) is the title of the document (if there is no corresponding title in the source file, then the title inherits from a subsection title or higher-level titles), and is also a 4-digit string separated by character ". "; UI interface designers can extract, and then present, this string on an electronic flight bag interface;
AIRCRAFT_NUMBER attribute (applicable range attribute) is the range of aircraft designations and is used to record the applicable range of the document. Since aircrafts are configured by airliners with respect to different flight routes, the operation steps stated in the document may be varied to some extent.

VALUE attribute (value attribute) is the specific content of the document. The document is a paragraph of text combinations with relatively complete content in a flight manual.

The content to which VALUE attribute corresponds is extracted using an XML parsing tool, and then converted into a corpus basic unit of a standard format (such as UTF-8 or the like) through a tokenizer enhanced by terminological dictionaries of aviation. The corpus basic unit is a paragraph of word combinations arranged in a contextual order, and each word of the corpus basic unit will generate a dense word vector in subsequent deep learning model training.

S002: performing deep neural network training on words to obtain dense word vectors;
According to the present invention, a deep learning model (such as word2vec, BERT model, etc. ) is employed to train each word in the corpus basic unit. A center word is extracted from the corpus, word sequences within a range of fixed length (window parameter) before and after the center word are utilized as a model input. The word sequences are denoted as a corresponding 200-dimensional dense vector using a weight matrix, and a loss function selects cross entropy. Under an optimization goal that conditional probability is predicted from the center word, an appropriate optimization algorithm (such as SGD stochastic gradient descent algorithm) is used to optimize the parameter matrix in a back-propagation fashion, and based on this, deep neural network training is performed on the weight matrix.

The operations in this step are not only suitable for generating dense word vectors for words in the corpus basic unit, but may also be used for generating dense word vectors intended for words in an input statement.

The specific training steps are as follows:

a) a trained word is converted, through a bag-of-words model, into an initial word vector $x^{(c)} \in \mathbb{R}^{|V|}$ with only the element 0 or 1. The length of the initial word vector is the total number $|V|$ of all word sets (excluding repeated words), the vector element at the position of the trained word is 1, the vector elements at other positions are 0, and this is typically called one-hot encoding; the initial word vectors of different one-hot encodings are completely independent;

b) window radius is set to m (m>0). On the basis that the trained word $x^{(c)}$ is taken as a center word and m words before and after the center word are taken as window words, an initial vector sequence of window words excluding the center word is formed: $x^{(c-m)}, x^{(c-m+1)}, ..., x^{(c-1)}, x^{(c+1)}, ..., x^{(c+m-1)}, x^{(c+m)}$;

c) an input weight matrix is initialized $\mathcal{V} \in \mathbb{R}^{|V| \times n}$. Here, n is the dense dimensionality, which is generally much smaller than a total number $|V|$ of word sets in the entire corpus. The purpose of doing this is to learn semantic and syntactic dependency features of the context of words. Meanwhile, to avoid the training failure caused by the learning gradient being 0, the input weight matrix $\mathcal{V}$ is generally initialized with a random variable of interval (0, 1). By converting the initial vector sequence of window words through this input weight matrix $\mathcal{V}$, a dense vector sequence of window words is formed as: $v_{c-m} = \mathcal{V}x^{(c-m)}, ..., v_{c+m} = \mathcal{V}x^{(c+m)} \in \mathbb{R}^n$, n « $|V|$;

d) a contextual dense word vector $\hat{v}$ is calculated. The individual semantic dependencies of m words before the center word and m words after the center word upon the center word, are saved respectively by the first m window word dense vectors and the last m window word dense vectors of the center word. $\hat{v} = \frac{v_{c-m} + v_{c-m+1} + \cdots + v_{c+m}}{2m} \in \mathbb{R}^n$ is obtained by summing and averaging these dense vectors, and the overall semantic dependency of center word context upon the center word is reflected.

e) an output weight matrix is initialized $\mathcal{U} \in \mathbb{R}^{n \times |V|}$. Similar to the considerations in step c) and likewise, to avoid the training failure caused by the learning gradient being 0, the output matrix $\mathcal{U}$ is generally initialized with a random variable of interval (0, 1), and the contextual dense word vector obtained from d) is converted into a score vector of the original size $|V|$ of the bag-of-words model: $z = \hat{v}\mathcal{U} \in \mathbb{R}^{|V|}$;

f) conditional probability is calculated $p(w_c|w_{c-m}, ..., w_{c-1}, w_{c+1}, ..., w_{c+m})$. The score vector obtained from step e) is not normalized; by normalizing the score vector through use of a softmax function, the conditional probability distribution of all words in the bag-of-words model can be obtained. The specific calculation approach is as follows:

$$\hat{y} = softmax(z) = \left( \frac{exp(z_1)}{\sum_{i=1}^{|V|} \exp(z_i)}, \frac{exp(z_2)}{\sum_{i=1}^{|V|} \exp(z_i)}, ..., \frac{exp(z_{|V|})}{\sum_{i=1}^{|V|} \exp(z_i)} \right)$$

where the c-th component $\hat{y}_c$ indicates the magnitude of conditional probability of the center word in the contextual window words: $p(w_c|w_{c-m}, ..., w_{c-1}, w_{c+1}, ..., w_{c+m})$;

g) a loss function of the conditional probability distribution is calculated. The conditional probability distribution calculated in f) is estimated through the weight matrix, and is somewhat different from the real conditional probability distribution. Ideally, the real conditional probability distribution shall be presented in such a form that follows:

$$y = \left( \underbrace{0,0,0, ...,0}_{c-1}, 1, \underbrace{0,0,0, ...,0}_{|V|-c} \right),$$

namely, the conditional probability of the center word appearing at the c-th component is 1, and the probability of this center word appearing at any other component is 0. The goal of deep learning model optimization is to make the gap between the conditional probability distribution calculated in f) and the real conditional probability distribution as small as possible. Such probability distribution gap size is in general described using cross-entropy (Cross-Entropy), i.e.,

$$H(\hat{y}, y) = - \sum_{j=1}^{|V|} y_j log(\hat{y}_j);$$

h) stochastic gradient descent training is performed in a back-propagation fashion. One word in the corpus is randomly chosen as the center word, and based on parameters where this word is located, the gradient of the loss function H with respect to the input parameter matrix $\mathcal{V}$ is calculated,

$$\text{i.e., } \boldsymbol{\mathcal{V}} = \boldsymbol{\mathcal{V}} - \alpha \frac{\partial H}{\partial \hat{y}} \frac{\partial \hat{y}}{\partial \hat{v}} \frac{\partial \hat{v}}{\partial \mathcal{V}}$$

To avoid a non-convergence situation of stochastic gradient descent, learning law $\alpha$ is gradually decreased during the training process;

i) return to step c) and the original input parameter matrix V is replaced. c), d), e), f), g) and h) are executed using the updated input parameter matrix. The deep learning model training does not cease until the loss function is smaller than a certain threshold. Output $v_{c-m} = \overline{\boldsymbol{\mathcal{V}}} x^{(c-m)}, \dots, v_{c+m} = \overline{\boldsymbol{\mathcal{V}}} x^{(c+m)} \in \mathbb{R}^n$, i.e., contextual dense word vector and center word vector, is calculated using the newly-obtained input parameter matrix $\overline{\boldsymbol{\mathcal{V}}}$. The dense word vector for each of the words is the dense word vector for the center word.

S003: building the knowledge graph according to similarities between the dense word vectors.

In an embodiment of the present invention, the semantic similarity between different word vectors is quantified by cosine similarity. Two different word vectors are visualized as a head entity node $w_n$ and a tail entity node $w_t$ in the knowledge graph KG, whereas the semantic similarity between them is visualized as a weight edge between the two nodes $r_{(w_h,w_t)} = \frac{\langle w_h, w_t \rangle}{\|w_h\| \cdot \|w_t\|}$ .

Added into the flight operation knowledge graph is a triple element $(w_h, r_{(w_h,w_t)}, w_t) \in KG$, which corresponds to the basic elements (head entity, relationship, tail entity) in the flight operation knowledge graph. The range of semantic similarity r between word vectors is a closed interval $[-1,1]$. The larger r gets, the closer the two nodes are in the knowledge graph.

In an embodiment of the present invention, the existing flight operation knowledge graph can be acquired directly and then applied in retrieval.

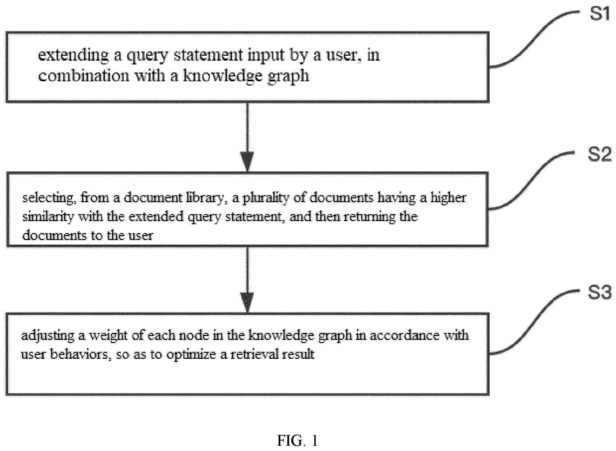

After acquired, the flight operation knowledge graph is applied to the interactive retrieval method. The specific implementation is shown in FIG. 1 and specifically includes:

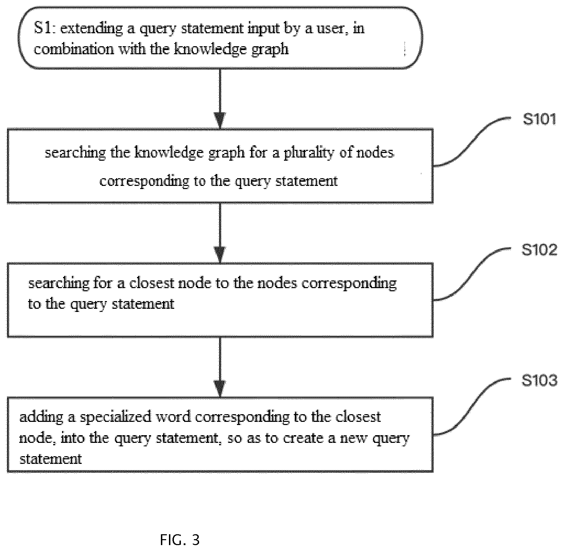

S1: extending a query statement input by a user, in combination with a knowledge graph; its detailed flow is illustrated in FIG. 3;
the knowledge graph has been created or acquired through the steps mentioned hereinabove.

By entering a query text into a query box of the electronic flight bag, a pilot can realize the human-computer interaction function in which he gives his query intention to the user interface. The query text entered by the pilot is passed, in the form of a string, to background programs, to act as an input for deep learning training. Subsequent to execution of a step that is identical to S002, a dense word vector of the query text, hereinafter referred to as a query statement, is obtained. Since the query text entered by the pilot contains multiple words, the query statement takes the form of a set containing multiple words.

S101: searching the knowledge graph for a plurality of nodes corresponding to the query statement;
In an embodiment of the present invention, with regard to the query statement $Q = (q_1, q_2, \dots, q_k)$ from the pilot, the flight operation knowledge graph is searched for corresponding nodes $(w_{q_1}, w_{q_2}, \dots, w_{q_k})$.

S102: searching for a closest node to the nodes corresponding to the query statement;
In an embodiment of the present invention, a node $(w_{q_1}, w_{\hat{q}_z}, \dots, w_{\hat{q}_k})$ having the closest relationship with the corresponding nodes is selected, and the above node shall satisfy $w_{\hat{q}_i} = argmax_{w_p} \left\{ r(w_{q_i}, w_p), \left( w_{q_i}, r_{(w_{q_i}, w_p)}, w_p \right) \in KG \right\}$ . If the knowledge graph does not have a triple that satisfies the requirements, i.e., the node is a frontier node, then a null value will be returned.

S103: adding a specialized word corresponding to the closest node, into the query statement, so as to create a new query statement.

In an embodiment of the present invention, the word vector of the node having the closest relationship with the corresponding nodes is added into the original query statement, which is therefore extended into a new query statement $Q_{ext} = (q_1, q_2, \dots, q_k, \tilde{q}_1, \tilde{q}_2, \dots, \tilde{q}_k)$. Considering the null value case, the length $|Q_{ext}|$ of the extended query statement is not greater than 2k and not smaller than k.

S2: selecting, from a document library, a plurality of documents having a highest similarity with the extended query statement, and then returning the documents to the user;

The list of corpus text units is obtained in S001 when the knowledge graph is built. The corpus text unit is a paragraph of word combinations arranged in a contextual order, and each word in the corpus basic unit generates a word vector in deep learning model training, forming a corpus text unitT = $(t_1, t_2, ..., t_s)$, which is a set containing multiple words.

The method for calculating the semantic similarity between the corpus text unit and the extended query statement is given below:

1: calculating an average dense word vector $\overline{w}_{Qext} = \frac{\sum_{i=1}^{k} w_{q_i}}{k}$ of the extended query statement;

2: calculating an average dense word vector $\overline{w}_T = \frac{\sum_{j=1}^{s} w_{t_j}}{s}$ of the corpus text unit; and

3: calculating the semantic similarity $r_{(\overline{w}_{Qext}, \overline{w}_T)} = \frac{\langle \overline{w}_{Qext}, \overline{w}_T \rangle}{\|\overline{w}_{Qext}\| \cdot \|\overline{w}_T\|}$ between the flight query statement and the corpus text unit.

**In** an embodiment of the present invention, 5 text units having the highest semantic similarity with the extended query statement are picked out by sorting in a reverse order, the ID and TITLE attributes of these text units are returned, and corresponding summaries are extracted using an appropriate summary extraction program. The ID attributes, TITLE attributes and summaries of these 5 text units are displayed together on the user interface of the electronic flight bag, creating a recommended entry for clicking and selection by the pilot.

S3: adjusting a weight of each node in the knowledge graph in accordance with user behaviors, so as to optimize a retrieval result.

In the present invention, the user behaviors include a query behavior and a click behavior.

Based on several recommended summaries fed back by the electronic flight bag, the pilot clicks on the summary text that best meets his current needs. With a monitoring mechanism, software in the electronic flight bag can acquire the start time of entering of the query text by the pilot, the content of the query text, the time at which summary is clicked, the sequential position of the clicked summary, and the text document where the clicked summary is located. The information regarding the above 5 dimensions is recorded as a pilot query logs.

According to the pilot query log, the weights between the nodes associated with the pilot's click behaviors are adjusted in the knowledge graph. Information, such as a query word vector, a resultative word vector, a Bool-type variable of whether the pilot's click exists, is entered into the knowledge graph. In the knowledge graph, an association relationship in which the query word vector is the head entity and the resultative word vector is the tail entity is enhanced in a way that is accomplished via a reward factor $\alpha(0<\alpha<1)$. The specific calculation approach for adjustment is as follows.

The weights of word vector 1 (query text) and word vector 2 (pilot-selected text) prior to the adjustment are set to be $r_{12}$. As word vector 2 has been selected by the pilot, an association weight for word vector 1 and word vector 2 is enhanced via the reward factor $\alpha(0<\alpha<1)$, in order to learn the pilot's query intention. The adjusted weight is

$$r'_{12} = \alpha + (1 - \alpha) \cdot r_{12} \in (r_{12}, 1).$$

The adjusted knowledge graph is saved for direct call at the time of next retrieval. The entire learning process forms a closed loop. A proprietary query tool that meets the individual needs of pilots can be created in a manner of human-in-the-loop interactive retrieval, thus increasing retrieval efficiency.

It shall be understood that the sequence numbers of various steps in the above embodiments do not imply the sequence of execution. The sequence of execution of various processes shall be determined by their functions and inner logics, and shall not constitute any limitation to the implementation process of the embodiments of the present invention.

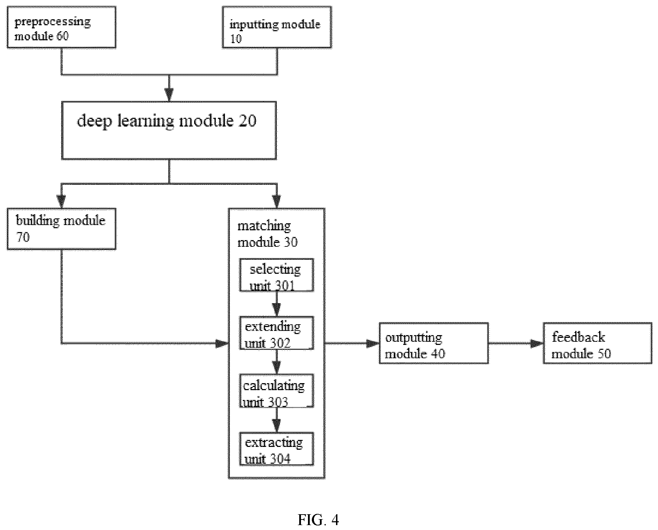

Provided is an electronic flight bag, including an interactive retrieval apparatus that is in one-to-one correspondence with the interactive retrieval method in the above-mentioned embodiment. As shown in FIG. 4, the interactive retrieval apparatus includes an inputting module 10, a deep learning module 20, a matching module 30, an outputting module 40, and a feedback module 50. A detailed description of these functional modules is given below.

The inputting module 10 is configured to perform human-computer interaction functions where a user gives query intentions, such as the user entering a query text, clicking a summary text or the like.

By entering the query text into a query box of the electronic flight bag, a pilot can realize the human-computer interaction function in which he gives his query intention to the user interface. The query text entered by the pilot is passed, in the form of a string, to background programs, to act as an input for deep learning training.

The deep learning module 20 is configured to train words to obtain dense word vectors of the words. A deep learning module is utilized to train every word in the corpus basic unit.

The matching module 30 is configured to match a similar corpus text unit according to the query text.

The outputting module 40 is configured to output a retrieval result and a recommendation result to the user.

The ID and TITLE attributes of a plurality of text units that are matched in the matching module 30 are returned, and corresponding summaries are extracted using an appropriate summary extraction program. The ID attributes, TITLE attributes and summaries of these 5 text units are displayed together on the user interface of the electronic flight bag for purposes of clicking and selection by the pilot.

The feedback module 50 is configured to enhance information relevancy in the knowledge graph in accordance with user behaviors.

Based on several recommended summaries fed back by the electronic flight bag, the pilot clicks on the summary text that best meets his current needs. With a monitoring mechanism, software in the electronic flight bag can acquire the start time of entering of the query text by the pilot, the content of the query text, the time at which summary is clicked, the sequential position of the clicked summary, and the text document where the clicked summary is located. The information above is recorded as a pilot query logs.

According to the pilot query log, the weights between the nodes associated with the pilot's click behaviors are adjusted in the knowledge graph. The calculation approach for adjustment is as follows.

The weights of word vector 1 (query text) and word vector 2 (pilot-selected text) prior to the adjustment are set to be $r_{12}$. As word vector 2 has been selected by the pilot, an association weight for word vector 1 and word vector 2 is enhanced via the reward factor $\alpha(0<\alpha<1)$, in order to learn the pilot's query intention. The adjusted weight is

$$r'_{12} = \alpha + (1-\alpha) \cdot r_{12} \in (r_{12}, 1).$$

The adjusted knowledge graph is saved for direct call at the time of next retrieval. After several queries, the knowledge graph becomes better adapted to the pilot's query intentions and habits, thus increasing retrieval efficiency.

In an embodiment, the above interactive retrieval apparatus further includes:
a preprocessing module 60, which is configured to process, and convert the source file into a unified format, and build the corpus using a tokenizer.

The source files are flight manual technology publications that provide important references for pilots, such as FCOM, SOP, QRH, etc. The above publications have been widely used by airlines. To meet the airline's demands for interactive manual access, information sharing as well as easy maintenance and updating, main aircraft manufacturers have accomplished electronization and digitalization of some flight manual technology publications by referring to S1000D and ATA2300 standards. There is a wide diversity offlight reference materials offered by various airlines, including flight manual paper files, flight manual PDF files, interactive electronic flight manuals, advisory circulars and other data sources in different formats. To maintain and update fundamental data, it is necessary to parse these data by utilizing a unified standard.

Based upon their editability, source files can be classified into text file type (TXT, EXCEL, WORD, XML) and PDF file type. The most basic unit for source file decomposition is a document with relatively complete semantics and logic. By taking the document as the smallest indivisible atomic unit, a source file is decomposed into combinations of multiple documents.

In the present application, ID attribute, TITLE attribute, AIRCRAFT_NUMBER attribute and VALUE attribute are added into each document through a strict logical hierarchy, so as to generate a standard document format.

The content to which VALUE attribute corresponds is extracted using an XML parsing tool, and then converted into a corpus basic unit of utf8 format through a tokenizer enhanced by terminological dictionaries of aviation. The corpus basic unit is a paragraph of word combinations arranged in a contextual order, and each specialized word of the corpus basic unit will generate a word vector in subsequent deep learning model training.

Also included in the interactive retrieval apparatus is a building module 70, which is configured to build a knowledge graph prior to the first retrieval.

First of all, the deep learning module 20 is utilized to train each specialized word in the corpus basic unit, in order to generate a dense word vector. The semantic similarity between different word vectors is quantified by cosine similarity. Two different word vectors are visualized as a head entity node $w_h$ and a tail entity node $w_t$ in the knowledge graph KG, whereas the semantic similarity between them is visualized as a weight edge between the two nodes $r(w_{h,w_t}) = \frac{\langle w_h, w_t \rangle}{\|w_h\| \cdot \|w_t\|}$.

Added into the flight operation knowledge graph is a triple element $(w_h, r_{(w_h, w_t)}, w_t) \in KG$. The range of semantic similarity r between word vectors is a closed interval $[-1,1]$. The larger r gets, the closer the two nodes are in the knowledge graph.

The matching module 30 includes:

a selecting unit 301, which is configured to select a node word vector closest to the query text in the knowledge graph;
in an embodiment of the present invention, with regard to the query statement $Q = (q_1, q_2, ..., q_k)$ from the pilot, the flight operation knowledge graph is searched for corresponding nodes $(w_{q1}, w_{q2}, ..., w_{qk})$;
an extending unit 302, which is configured to extend the query text;
in an embodiment of the present invention, a node $(w_{\tilde{q}_1}, w_{\tilde{q}_2}, ..., w_{\tilde{q}_k}$ having the closest relationship with the corresponding nodes is selected, and the above node shall satisfy $w_{\tilde{q}i}$ =

$$argmax_{w_p} \left\{ r\left(w_{q_i}, w_p\right), \left(w_{q_i}, r_{(w_{q_i}, w_p)}, w_p\right) \in KG \right\}$$. If the knowledge graph does not have a triple that satisfies the requirements, i.e., the node is a frontier node, then a null value will be returned;

in an embodiment of the present invention, the word vector of the node having the closest relationship with the corresponding nodes is added into the original query statement, which is therefore extended into a new query statement$Q_{ext}$ = $(q_1, q_2, ..., q_k, \tilde{q}_1, \tilde{q}_2, ..., \tilde{q}_k)$. Considering the null value case, the length $|Q_{ext}|$ of the extended query statement is not greater than 2k and not smaller than k;

a calculating unit 303, which is configured to calculate the semantic similarity between the extended query text and the corpus text unit;

the list of corpus text units is obtained when the knowledge graph is built. The corpus text unit is a paragraph of word combinations arranged in a contextual order, and each word in the corpus basic unit generates a word vector in deep learning model training, forming a corpus text unit T = $(t_1, t_2, ..., t_s)$, which is a set containing multiple words;

the method for calculating the semantic similarity between the corpus text unit and the extended query statement is given below:

1: calculating an average dense word vector $\overline{w}_{Qext} = \dfrac{\sum_{i=1}^{k} w_{q_i}}{k}$, of the extended query statement;

2: calculating an average dense word vector $\overline{w}_T = \dfrac{\sum_{j=1}^{s} w_{t_j}}{s}$ of the corpus text unit; and

3: calculating the semantic similarity $r_{(\overline{w}_{Qext}, \overline{w}_T)} = \dfrac{\langle \overline{w}_{Qext}, \overline{w}_T \rangle}{\|\overline{w}_{Qext}\| \cdot \|\overline{w}_T\|}$ between the flight query statement and the corpus text unit;

an extracting unit 304, which is configured to extract a plurality of corpus text units having the highest semantic similarity.

In an embodiment of the present invention, 5 text units having the highest semantic similarity are picked out by sorting in a reverse order, the ID and TITLE attributes of these text units are returned, and corresponding summaries are extracted using an appropriate summary extraction program. The ID attributes, TITLE attributes and summaries of these 5 text units are displayed together on the user interface of the electronic flight bag for purposes of clicking and selection by the pilot.

With regard to specific limitations to the interactive retrieval apparatus, reference can be made to the above limitations to the interactive retrieval method, so a detailed description thereof is not given here. Various modules in the above-mentioned interactive retrieval apparatus can be entirely or partly implemented by software, hardware and combinations thereof. The above modules can be embedded in or independent of a processor in a computer device in the form of hardware, or stored in a memory in the computer device in the form of software, so that the processor can call and execute operations to which the above modules are corresponding.

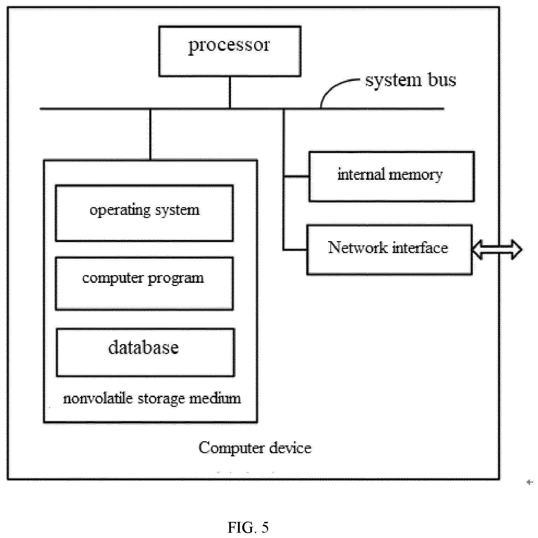

Provided is a computer device of an electronic flight bag. The computer device, which may be a server, has an internal structure as shown in FIG. 5 . The computer device includes a processor, a memory, a network interface, and a database that are connected via a system bus. The processor of the computer device is used to provide computing and control capabilities. The memory of the computer device includes a nonvolatile storage medium and an internal memory. An operating system, a computer program and a database are stored in the nonvolatile storage medium. The internal memory provides an environment for execution of the operating system and the computer program in the nonvolatile storage medium. The network interface of the computer device is used to communicate with an external terminal through a network connection. The computer program, when executed by the processor, implements an interactive retrieval method.

In an embodiment, provided is a computer device including a memory, a processor, and a computer program stored on the memory and runnable on the processor. The processor, when executing the computer program, implements the following steps:

S1: extending a query statement input by a user, in combination with a knowledge graph;

S2: selecting, from a document library, a plurality of documents having a highest similarity with the extended query statement, and then returning the documents to the user; and

S3: adjusting a weight of each node in the knowledge graph in accordance with user behaviors, so as to optimize a retrieval result.

Optionally, prior to the first retrieval, building the knowledge graph or acquiring the existing knowledge graph is required, wherein building the knowledge graph, namely S0, specifically includes:S001: converting source files into a standard document format and building a corpus; S002: performing deep neural network training on words to obtain dense word vectors; and S003: building the knowledge graph according to similarities between the dense word vectors.

Optionally, the standard document format includes the following attributes:an identifier attribute for indicating a specific location of a document in the source file; a title attribute for recording a title of the document; an applicable range attribute for recording detailed regulations on an applicable range of the document; and a value attribute for recording the specific content of the document.

Optionally, in S1, with regard to the knowledge graph, words corresponding to the word vectors are taken as nodes and a semantic similarity between the word vectors is taken as a weight edge.

S1 includes: S101: searching the knowledge graph for a plurality of nodes corresponding to the query statement; S102: searching for a closest node to the nodes corresponding to the query statement; and S103: adding a specialized word corresponding to the closest node, into the query statement, so as to create a new query statement.

The semantic similarity in S2 is calculated from average dense word vectors of a word set.

Provided is a computer storage medium of an electronic flight bag having a computer program stored thereon. The computer program, when executed by a processor, implements the following steps:

> S1: extending a query statement input by a user, in combination with a knowledge graph;
> S2: selecting, from a document library, a plurality of documents having a higher similarity with the extended query statement, and then returning the documents to the user; and
> S3: adjusting a weight of each node in the knowledge graph in accordance with user behaviors, so as to optimize a retrieval result.

Optionally, prior to the first retrieval, building the knowledge graph or acquiring the existing knowledge graph is required, wherein building the knowledge graph, namely S0, specifically includes:S001: converting source files into a standard document format and building a corpus; S002: performing deep neural network training on words to obtain dense word vectors; and S003: building the knowledge graph according to similarities between the dense word vectors.

Optionally, the standard document format includes the following attributes:an identifier attribute for indicating a specific location of a document in the source file; a title attribute for recording a title of the document; an applicable range attribute for recording detailed regulations on an applicable range of the document; and a value attribute for recording the specific content of the document.

Optionally, in S1, with regard to the knowledge graph, words corresponding to the word vectors are taken as nodes and a semantic similarity between the word vectors is taken as a weight edge.

Optionally, S1 includes: S101: searching the knowledge graph for a plurality of nodes corresponding to the query statement; S102: searching for a closest node to the nodes corresponding to the query statement; and S103: adding a specialized word corresponding to the closest node, into the query statement, so as to create a new query statement.

The semantic similarity in S2 is calculated from average dense word vectors of a word set.

Those of ordinary skill in the art can understand that all or part of the process flows in the methods of the above embodiments can be implemented by instructing relevant hardware through a computer program. Said computer program can be stored in a nonvolatile computer-readable storage medium, and when executed, can include the process flows of the embodiments of the above methods. Any reference to memory, storage, database, or other medium used in various embodiments according to the present invention may include nonvolatile and/or volatile memory. The nonvolatile memory may include read-only memory (ROM), programmable ROM (PROM), electrically programmable ROM (EPROM), electrically erasable programmable ROM (EEPROM), or flash memory. The volatile memory may include random access memory (RAM) or external cache memory. By way of illustration and not limitation, RAM is available in various forms, such as static RAM (SRAM), dynamic RAM (DRAM), synchronous DRAM (SDRAM), double data rate SDRAM (DDRSDRAM), enhanced SDRAM (ESDRAM), synchronous link (Synchlink) DRAM (SLDRAM), Rambus direct RAM (RDRAM), direct Rambus dynamic RAM (DRDRAM), and Rambus dynamic RAM (RDRAM), etc.

Those skilled in the art can clearly appreciate that for convenience and brevity of the description, only division of the abovementioned functional units and modules is used for illustration. In practical applications, the abovementioned function allocation can be done by different functional units and modules as required, i.e., the internal structure of the apparatus is divided into different functional units or modules, in order to complete all or part of the functions described above.

The above embodiments are merely for illustrating the technical solutions of the present invention, rather than limitations thereto; although the present invention has been described in details with reference to the foregoing embodiments, those of ordinary skill in the art shall understand that it is still possible to modify the technical solutions stated in the foregoing embodiments, or perform equivalent replacements on some of the technical features.

**Claims**

1. An interactive retrieval computer implemented method performed on an onboard computer of an electronic flight bag, said electronic flight bag further including an electronic database stored in the computer, the method comprising:

   S1: extending a query statement input by a user, namely a pilot of an aircraft comprising the electronic flight bag, in combination with a knowledge graph, in order to obtain an extended query statement; wherein S1 comprises:

   S101: searching the knowledge graph for a plurality of nodes corresponding to the query statement;
   S102: searching for a closest node to the nodes corresponding to the query statement; and
   S103: adding a specialized word corresponding to the closest node, into the query statement, so as to create the extended query statement;

   S2: selecting, from a document library, a plurality of documents having a highest semantic similarity with the extended query statement, wherein the semantic similarity is calculated from average dense word vectors of a word set, and then returning the documents to the user; and S3: adjusting a weight of each node in the knowledge graph in accordance with user behaviors, so as to optimize a retrieval result;
   wherein the user behaviors including the following information records: the start time of entering of the query statement by the user, the content of the query statement, the time at which document summary is clicked, the sequential position of the clicked document summary, and the document where the clicked document summary is located, which are monitored via a monitoring mechanism and recorded as a pilot query log; the weights between the nodes are adjusted according to the pilot query log, wherein the adjusted weight is $r'_{12} = \alpha + (1 - \alpha) \cdot$ . $r_{12} \in (r_{12}, 1)$, wherein an associated weight of the query statement and a pilot-selected text is set to be $r_{12}, \alpha$ is a reward factor and $(0 < \alpha < 1)$.

2. The interactive retrieval computer implemented method according to claim 1, **characterized in that** prior to the first retrieval, building the knowledge graph or acquiring the existing knowledge graph is required, wherein building the knowledge graph, namely S0, specifically comprises:

   S001: converting source files into a standard document format and building a corpus;
   S002: performing deep neural network training on words to obtain dense word vectors; and
   S003: building the knowledge graph according to similarities between the dense word vectors.

3. The interactive retrieval computer implemented method according to claim 2, **characterized in that** the standard document format comprises the following attributes:

   an identifier attribute for indicating a specific location of a document in the source file;
   a title attribute for recording a title of the document;
   an applicable range attribute for recording detailed regulations on an applicable range of the document; and
   a value attribute for recording the specific content of the document.

4. The interactive retrieval computer implemented method according to claim 1, **characterized in that** in S1, with regard to the knowledge graph, words corresponding to the word vectors are taken as nodes and a semantic similarity between the word vectors is taken as a weight edge.

5. An electronic flight bag, including an interactive retrieval apparatus, comprising:

   an inputting module (10) configured to perform human-computer interaction functions where a user gives query intentions, such as the user, namely a pilot of an aircraft comprising the electronic flight bag, entering a query text, clicking a summary text or the like;
   a deep learning module (20) configured to train words to obtain dense word vectors of the words;
   a matching module (30) configured to match a similar corpus text unit according to the query text, wherein the matching module (30) includes: a selecting unit (301) configured to select a node word vector closest to the query text in a knowledge graph, an extending unit (302) configured to extend the query text by adding the closest node word vector into the query text in order to obtain an extended query text, a calculating unit (303) configured to calculate a semantic similarity between the extended query text and corpus text units, and an extracting unit (304) configured to extract a plurality of corpus text units having the highest semantic similarity with the extended query text;

an outputting module (40) configured to output a retrieval result and a recommendation result to the user; and

a feedback module (50) configured to enhance information relevancy in a knowledge graph in accordance with user behaviors,

wherein the user behaviors including the following information records: the start time of entering of the query statement by the user, the content of the query statement, the time at which document summary is clicked, the sequential position of the clicked document summary, and the document where the clicked document summary is located, which are monitored via a monitoring mechanism and recorded as a pilot query log; the weights between the nodes are adjusted according to the pilot query log, wherein the adjusted weight is $r'_{12} = \alpha + (1-\alpha) \cdot$ . $r_{12} \in (r_{12}, 1)$, wherein an associated weight of the query text and a pilot-selected text is set to be $r_{12}, \alpha$ is a reward factor and ($0 < \alpha < 1$).

6. A computer device of an electronic flight bag, the computer device comprising a memory, a processor, and a computer program stored on the memory and runnable on the processor, **characterized in that** the processor implements the interactive retrieval computer implemented method of any of claims 1 to 4 when executing the computer program.

7. A computer storage medium of an electronic flight bag, the computer storage medium having a computer program stored thereon, **characterized in that** the computer program, when executed by a processor, implements the interactive retrieval computer implemented method of any of claims 1 to 4.

**Patentansprüche**

1. Ein interaktives, computerimplementiertes Abfrageverfahren, das auf einem Bordcomputer eines Electronic flight bag durchgeführt wird, wobei das Electronic flight bag ferner eine elektronische Datenbank enthält, die in dem Computer gespeichert ist, das Verfahren umfassend:

S1: Erweitern eines Abfrageanweisungseingangs, der von einem Benutzer, nämlich einem Piloten eines Flugzeugs, welches das Electronic flight bag umfasst, eingegeben wird, in Kombination mit einem Wissensgraphen, um eine erweiterte Abfrageanweisung zu erhalten; wobei S1 umfasst:

S101: Durchsuchen des Wissensgraphen nach einer Vielzahl von Knoten, die der Abfrageanweisung entsprechen;
S102: Suchen eines Knotens, der den der Abfrageaussage entsprechenden Knoten am nächsten liegt; und
S103: Hinzufügen eines spezialisierten Wortes, das dem nächstgelegenen Knoten entspricht, zu der Abfrageanweisung, um die erweiterte Abfrageanweisung zu erzeugen;

S2: Auswählen einer Vielzahl von Dokumenten aus einer Dokumentenbibliothek, die eine höchste semantische Ähnlichkeit mit der erweiterten Abfrageanweisung aufweisen, wobei die semantische Ähnlichkeit aus durchschnittlich dichten Wortvektoren eines Wortsatzes berechnet wird, und anschließendes Zurückgeben der Dokumente an den Benutzer; und
S3: Einstellen einer Gewichtung jedes Knotens in dem Wissensgraphen gemäß dem Benutzerverhalten, um ein Abfrageergebnis zu optimieren;

wobei die Benutzerverhalten die folgenden Informationssätze enthalten: die Startzeit der Eingabe der Abfrageanweisung durch den Benutzer, den Inhalt der Abfrageanweisung, die Zeit, zu der Dokumentzusammenfassung angeklickt wird, die sequentielle Position der angeklickten Dokumentzusammenfassung und das Dokument, in dem sich die angeklickte Dokumentzusammenfassung befindet, welche über einen Überwachungsmechanismus überwacht und als ein Pilotabfrageprotokoll aufgezeichnet werden; wobei die Gewichtungen zwischen den Knoten gemäß dem Pilotabfrageprotokoll eingestellt werden, wobei das eingestellte Gewicht

$$r'_{12} = \alpha + (1-\alpha) \cdot r_{12} \in (r_{12}, 1)$$

ist, wobei eine zugeordnete Gewichtung der Abfrageanweisung und eines Pilot-ausgewählten Textes auf $r_{12}, \alpha$ festgelegt wird, $\alpha$ ein Belohnungsfaktor ist und ($0 < \alpha < 1$).

2. Das interaktive, computerimplementierte Abfrageverfahren gemäß Anspruch 1, **dadurch gekennzeichnet, dass** vor der ersten Abfrage der Aufbau des Wissensgraphen oder das Erfassen des bestehenden Wissensgraphen erforderlich ist, wobei der Aufbau des Wissensgraphen, nämlich S0, konkret umfasst:

S001: Konvertierung von Quelldateien in ein Standarddokumentenformat und Aufbau eines Korpus;
S002: Durchführen eines tiefen neuronalen Netzwerktrainings für Wörter, um dichte Wortvektoren zu erhalten; und
S003: Aufbau des Wissensgraphen gemäß Ähnlichkeiten zwischen den dichten Wortvektoren.

3. Das interaktive, computerimplementierte Abfrageverfahren gemäß Anspruch 2, **dadurch gekennzeichnet, dass** das Standarddokumentenformat die folgenden Attribute umfasst:

ein Identifizierungsattribut zur Angabe einer bestimmten Stelle eines Dokuments in der Quelldatei;
ein Titelattribut zur Aufzeichnung eines Titels des Dokuments
ein Attribut "Anwendbarer Bereich" zur Aufzeichnung detaillierter Vorschriften über einen anwendbaren Bereich des Dokuments; und
ein Wertattribut zur Aufzeichnung des spezifischen Inhalts des Dokuments.

4. Das interaktive, computerimplementierte Abfrageverfahren gemäß Anspruch 1, **dadurch gekennzeichnet, dass** in S1 in Bezug auf den Wissensgraphen den Wortvektoren entsprechende Wörter als Knoten und eine semantische Ähnlichkeit zwischen den Wortvektoren als Gewichtungskante genommen wird.

5. Ein Electronic flight bag, das eine interaktive Abfragevorrichtung enthält, umfassend:

ein Eingabemodul (10), das dazu eingerichtet ist, Mensch-Computer-Interaktionsfunktionen auszuführen, bei denen ein Benutzer Abfrageabsichten angibt, wie ein Eingeben eines Abfragetextes, ein Anklicken eines Zusammenfassungstexts oder dergleichen durch den Benutzer, nämlich einen Piloten eines Flugzeugs, welches das Electronic flight bag umfasst;
ein Deep-Learning-Modul (20), das dazu eingerichtet ist, Wörter zu trainieren, um dichte Wortvektoren der Wörter zu erhalten;
ein Abgleichsmodul (30), das dazu eingerichtet ist, eine ähnliche Korpustexteinheit gemäß dem Abfragetext abzugleichen, wobei das Abgleichsmodul (30) enthält: eine Auswahleinheit (301), die dazu eingerichtet ist, einen Knotenwortvektor auszuwählen, der dem Abfragetext in einem Wissensgraphen am nächsten liegt, eine Erweiterungseinheit (302), die dazu eingerichtet ist, den Abfragetext zu erweitern, indem der nächstgelegene Knotenwortvektor in den Abfragetext eingefügt wird, um einen erweiterten Abfragetext zu erhalten, eine Berechnungseinheit (303), die dazu eingerichtet ist, eine semantische Ähnlichkeit zwischen dem erweiterten Abfragetext und Korpustexteinheiten zu berechnen, und eine Extraktionseinheit (304), die dazu eingerichtet ist, eine Vielzahl von Korpustexteinheiten zu extrahieren, die die höchste semantische Ähnlichkeit mit dem erweiterten Abfragetext aufweisen;
ein Ausgabemodul (40), das dazu eingerichtet ist, ein Abfrageergebnis und ein Empfehlungsergebnis an den Benutzer auszugeben; und
ein Feedback-Modul (50), das dazu eingerichtet ist, Informationsrelevanz in einem Wissensgraphen gemäß Benutzerverhalten zu verbessern,
wobei die Benutzerverhalten die folgenden Informationssätze enthalten: die Startzeit der Eingabe der Abfrageanweisung durch den Benutzer, den Inhalt der Abfrageanweisung, die Zeit, zu der Dokumentzusammenfassung angeklickt wird, die sequentielle Position der angeklickten Dokumentzusammenfassung und das Dokument, in dem sich die angeklickte Dokumentzusammenfassung befindet, welche über einen Überwachungsmechanismus überwacht und als ein Pilotabfrageprotokoll aufgezeichnet werden; wobei die Gewichtungen zwischen den Knoten gemäß dem Pilotabfrageprotokoll eingestellt werden, wobei das eingestellte Gewicht

$$r'_{12} = \alpha + (1 - \alpha) \cdot r_{12} \in (r_{12}, 1)$$

ist, wobei eine zugeordnete Gewichtung des Abfragetexts und eines Pilot-ausgewählten Textes auf $r_{12}$, $\alpha$ festgelegt wird, $\alpha$ ein Belohnungsfaktor ist und ($0<\alpha<1$).

6. Ein Computergerät eines Electronic flight bag, wobei das Computergerät einen Speicher, einen Prozessor und ein im Speicher gespeichertes und auf dem Prozessor ablauffähiges Computerprogramm umfasst, **dadurch gekennzeichnet, dass** der Prozessor bei der Ausführung des Computerprogramms das interaktive, computerimplementierte Abfrageverfahren nach einem der Ansprüche 1 bis 4 implementiert.

7. Ein Computerspeichermedium eines Electronic flight bag, wobei das Computerspeichermedium ein darauf gespeichertes Computerprogramm aufweist, **dadurch gekennzeichnet, dass** das Computerprogramm, wenn es von einem Prozessor ausgeführt wird, das interaktive, computerimplementierte Abfrageverfahren nach einem der Ansprüche 1 bis 4 implementiert.

**Revendications**

1. Procédé mis en œuvre par ordinateur de récupération interactive exécuté sur un ordinateur de bord d'un sac de vol électronique, ledit sac de vol électronique comprenant en outre une base de données électronique stockée dans l'ordinateur, le procédé comprenant :

   S1 : étendre un énoncé de requête saisi par un utilisateur, à savoir un pilote d'un aéronef comprenant le sac de vol électronique, en combinaison avec un graphe de connaissances, afin d'obtenir un énoncé de requête étendu ; dans lequel S1 comprend :

   S101 : rechercher le graphe de connaissances pour une pluralité de nœuds correspondant à l'énoncé de requête ;
   S102 : rechercher un nœud le plus proche des nœuds correspondant à l'énoncé de requête ; et
   S103 : ajouter un mot spécialisé correspondant au nœud le plus proche dans l'énoncé de requête, de manière à créer l'énoncé de requête étendu ;

   S2 : sélectionner, dans une bibliothèque de documents, une pluralité de documents ayant une plus grande similarité sémantique avec l'énoncé de requête étendu, dans lequel la similarité sémantique est calculée à partir des vecteurs de mots denses moyens d'un ensemble de mots, et puis renvoyer les documents à l'utilisateur ; et
   S3 : ajuster un poids de chaque nœud dans le graphe de connaissances conformément à des comportements d'utilisateur, de manière à optimiser un résultat de récupération ;
   dans lequel les comportements d'utilisateur comprenant les fiches d'informations suivantes : le moment de début de la saisie de l'énoncé de requête par l'utilisateur, le contenu de l'énoncé de requête, le moment auquel résumé de document est cliqué, la position séquentielle du résumé de document cliqué et le document où se trouve le résumé de document cliqué, qui sont surveillés par un mécanisme de surveillance et enregistrés comme journal de requête pilote ; les poids entre les nœuds sont ajustés selon le journal de requête pilote, dans lequel le poids ajusté est $r'_{12} = \alpha + (1 - \alpha) \cdot r_{12} \, \varepsilon \, (r_{12}, 1)$, dans lequel un poids associé de l'énoncé de requête et un texte sélectionné par le pilote est défini comme étant $r_{12}$, $\alpha$ est un facteur de récompense et $(0 < \alpha << 1)$.

2. Le procédé mis en œuvre par ordinateur de récupération interactive selon la revendication 1, **caractérisé en ce qu'**avant la première récupération, il est nécessaire de construire le graphe de connaissances ou d'acquérir le graphe de connaissances existant, dans lequel construire le graphe de connaissances, à savoir S0, comprend spécifiquement :

   S001 : convertir des fichiers sources dans un format de document standard et construire un corpus ;
   S002 : effectuer un entrainement de réseau neuronal profond sur des mots pour obtenir des vecteurs de mots denses ; et
   S003 : construire le graphe de connaissances selon les similarités entre les vecteurs de mots denses.

3. Le procédé mis en œuvre par ordinateur de récupération interactive selon la revendication 2, **caractérisé en ce que** le format de document standard comprend les attributs suivants :

   un attribut d'identification pour indiquer l'endroit spécifique d'un document dans le fichier source ;
   un attribut de titre pour enregistrer un titre du document ;
   un attribut de plage applicable pour enregistrer des réglementations détaillées sur une plage applicable du document ; et
   un attribut de valeur pour enregistrer le contenu spécifique du document.

4. Le procédé mis en œuvre par ordinateur de récupération interactive selon la revendication 1, **caractérisé en ce que** dans S1, en ce qui concerne le graphe de connaissances, des mots correspondant aux vecteurs de mots sont considérés comme des nœuds et une similarité sémantique entre les vecteurs de mots est considérée comme une arête de poids.

5. Sac de vol électronique, comprenant un appareil de récupération interactive, comprenant :

   un module de saisie (10) configuré pour exécuter des fonctions d'interaction homme-ordinateur où un utilisateur donne des intentions de requête, comme l'utilisateur, à savoir un pilote d'un aéronef comprenant le sac de vol électronique, saisissant un texte de requête, cliquant sur un texte de résumé ou similaire ;

un module d'apprentissage profond (20) configuré pour entraîner des mots afin d'obtenir des vecteurs de mots denses des mots ;

un module de mise en correspondance (30) configuré pour mettre en correspondance une unité de texte de corpus similaire selon le texte de requête, dans lequel le module de mise en correspondance (30) comprend : une unité de sélection (301) configurée pour sélectionner un vecteur de mots de nœud le plus proche du texte de requête dans un graphe de connaissances, une unité d'extension (302) configurée pour étendre le texte de requête en ajoutant le vecteur de mots de nœud le plus proche au texte de requête afin d'obtenir un texte de requête étendu, une unité de calcul (303) configurée pour calculer une similarité sémantique entre le texte de requête étendu et les unités de texte de corpus, et une unité d'extraction (304) configurée pour extraire une pluralité d'unités de texte de corpus ayant la plus grande similarité sémantique avec le texte de requête étendu ;

un module de sortie (40) configuré pour fournir un résultat de récupération et un résultat de recommandation à l'utilisateur ; et

un module de retour d'information (50) configuré pour améliorer la relevance d'informations dans un graphe de connaissances conformément à des comportements d'utilisateur,

dans lequel les comportements d'utilisateur comprenant les fiches d'informations suivantes : le moment de début de la saisie de l'énoncé de requête par l'utilisateur, le contenu de l'énoncé de requête, le moment auquel résumé de document est cliqué, la position séquentielle du résumé de document cliqué et le document où se trouve le résumé de document cliqué, qui sont surveillés par un mécanisme de surveillance et enregistrés comme journal de requête pilote ; les poids entre les nœuds sont ajustés selon le journal de requête pilote, dans lequel le poids ajusté est $r'_{12} = \alpha + (1-\alpha) \cdot r_{12}\varepsilon(r_{12},1)$, dans lequel un poids associé de l'énoncé de requête et un texte sélectionné par le pilote est défini comme étant $r_{12}$, $\alpha$ est un facteur de récompense et $(0 < \alpha < 1)$.

6. Dispositif d'ordinateur d'un sac de vol électronique, le dispositif d'ordinateur comprenant une mémoire, un processeur et un programme d'ordinateur stocké sur la mémoire et exécutable sur le processeur, **caractérisé en ce que** le processeur met en œuvre le procédé mis en œuvre par ordinateur de récupération interactive de l'une quelconque des revendications 1 à 4 lors de l'exécution du programme d'ordinateur.

7. Support de stockage d'ordinateur d'un sac de vol électronique, le support de stockage d'ordinateur ayant stocké un programme d'ordinateur là-dessus, **caractérisé en ce que** le programme d'ordinateur, lorsqu'il est exécuté par un processeur, met en œuvre le procédé mis en œuvre par ordinateur de récupération interactive de l'une quelconque des revendications 1 à 4.

extending a query statement input by a user, in
combination with a knowledge graph

— S1

selecting, from a document library, a plurality of documents having a higher
similarity with the extended query statement, and then returning the
documents to the user

— S2

adjusting a weight of each node in the knowledge graph in accordance with
user behaviors, so as to optimize a retrieval result

— S3

FIG. 1

S0: building a knowledge
graph

S001

converting source files into a standard document
format and building a corpus

S002

performing deep neural network training on words to
obtain dense word vectors

S003

building the knowledge graph according to similarities
between the dense word vectors

FIG. 2

S1: extending a query statement input by a user, in combination with the knowledge graph

searching the knowledge graph for a plurality of nodes corresponding to the query statement    S101

searching for a closest node to the nodes corresponding to the query statement    S102

adding a specialized word corresponding to the closest node, into the query statement, so as to create a new query statement    S103

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109359178 A